Europäisches Patentamt

European Patent Office

Office européen des brevets

(19)

(11) Veröffentlichungsnummer : **0 059 163**
**B1**

(12) **EUROPÄISCHE PATENTSCHRIFT**

(45) Veröffentlichungstag der Patentschrift :
03.04.85

(51) Int. Cl.⁴ : **F 16 C   3/02**, F 16 B   4/00

(21) Anmeldenummer : 82810064.4

(22) Anmeldetag : 12.02.82

(54) **Verbindung einer Kunststoff-Torsionswelle mit einem Metallelement und Verfahren zur Herstellung der Verbindung.**

(30) Priorität : 18.02.81 CH 1070/81

(43) Veröffentlichungstag der Anmeldung :
01.09.82 Patentblatt 82/35

(45) Bekanntmachung des Hinweises auf die Patenterteilung : 03.04.85 Patentblatt 85/14

(84) Benannte Vertragsstaaten :
CH DE FR GB IT LI NL SE

(56) Entgegenhaltungen :
EP-A- 0 009 007
EP-A- 0 028 978
DE-A- 2 306 215
DE-A- 2 950 581
FR-A- 2 428 515
GB-A- 2 051 303
GB-A- 2 071 812
US-A- 3 638 979
US-A- 3 788 098
US-A- 3 905 208
US-A- 4 248 062

(73) Patentinhaber : CIBA-GEIGY AG
Postfach
CH-4002 Basel (CH)

(72) Erfinder : Rüegg, Christoph, Dr.
Kannenfeldstrasse 24
CH-4056 Basel (CH)
Erfinder : Voirol, Peter
Gorenmattstrasse 41
CH-4102 Binningen (CH)
Erfinder : Fuchs, Willi
St. Johanns-Vorstadt 60
CH-4056 Basel (CH)
Erfinder : Meister, Hans Ulrich, Dr.
Rütiring 78
CH-4125 Riehen (CH)

## Beschreibung

Die Erfindung betrifft eine Verbindung einer aus einem faserverstärkten Kunststoffrohr bestehenden Torsionswelle mit einem Metallelement, insbesondere einem Krafteinleitungsfitting, sowie ein Verfahren zur Herstellung einer solchen Verbindung.

Die Verwendung von faserverstärktem Kunststoff als Konstruktionsmaterial schreitet immer stärker voran. So werden bereits auch Kraftübertragungswellen für Maschinen und insbesondere auch Kraftfahrzeuge aus diesem Werkstoff gefertigt. Näheres darüber findet sich z. B. in der EP-A-9007.

Eine der Hauptschwierigkeiten bei der Konstruktion solcher Torsionswellen aus Kunststoff besteht in der Krafteinleitung in die Welle. Die Einleitung des Drehmoments erfolgt üblicherweise mittels eines Metall-Anschluss- oder Uebergangsstückes, eines sogenannten Fittings, der in geeigneter Weise drehfest mit der Welle verbunden werden muss. Zur Befestigung des Fittings an bzw. in der Welle sind schon eine Reihe von Lösungen bekannt geworden. So wird der Fitting z. B. gemäss der US-Patentschrift 4041599 durch Klebung rein kraftschlüssig mit der Welle verbunden, während z. B. die Verbindung nach der EP-A-9007 mittels Bolzen erfolgt und demnach rein formschlüssig ist. Ferner sind auch schon Kombinationen von formschlüssigen und kraftschlüssigen Verbindungen für solche Zwecke bekannt. Alle diese Verbindungsmöglichkeiten konnten jedoch in der Praxis nicht vollständig befriedigen. Teils sind sie zu kompliziert und aufwendig in der Herstellung und teils sind sie nicht zur Uebertragung der vielfach recht hohen Drehmomente geeignet.

Aus der US-A-3 638 979 ist eine drehmomentübertragende Verbindung bekannt, bei der die Wand einer aus faserverstärktem Kunststoff bestehenden Torsionswelle reibschlüssig zwischen einem inneren und einem äusseren Metallelement eingespannt ist. Das innere Metallelement besteht aus einer Mehrzahl von Spreizfingern, die mittels eines Schraubkonus gespreizt gehalten sind. Diese Verbindung hat u. a. den Nachteil, dass sie konstruktiv relativ aufwendig ist.

Aus der prioritätsälteren EP-A-28978 ist eine kraftübertragende Verbindung bekannt, bei der die Wand eines aus faserverstärktem Kunststoff bestehenden Zug- oder Druckrohrs zwischen zwei Metallringen gehalten ist. Diese bekannte Verbindung dient jedoch ausschliesslich zur Uebertragung von Zug- oder Druckkräften in axialer Richtung, über die Einleitung von Drehmomenten ist in dieser Veröffentlichung nichts enthalten.

Durch die vorliegende Erfindung soll eine effiziente und einfach herstellbare Verbindung für Kunststoffwellen mit Metallteilen geschaffen werden. Ferner soll durch die Erfindung auch ein Verfahren zur Herstellung einer solchen Verbindung aufgezeigt werden.

Die erfindungsgemässe Lösung dieser Ziele ist in den Patentansprüchen 1 und 9 beschrieben. Vorteilhafte Ausgestaltungen der Erfindung gehen aus den übrigen Ansprüchen hervor.

Die erfindungsgemässe Verbindung basiert somit auf dem Prinzip der Reibschlussverbindung. Einfache Reibschlussverbindungen, bei denen die zu verbindenden Teile thermisch gegeneinander verspannt sind (sog. Schrumpfverbindungen), sind im Metallbau z. B. für die Befestigung von Zahnrädern auf Antriebswellen üblich. Dort sind jedoch stets Teile aus gleichen bzw. vergleichbaren Materialien mit ähnlichen Festigkeitseigenschaften miteinander verbunden. Die unmittelbare Anwendung dieser Schrumpftechnik für die Verbindung von so verschiedenartigen Werkstoffen wie Metall und faserverstärktem Kunststoff ist nicht möglich. Erst das erfindungsgemässe Prinzip der beidseitigen Einspannung der Rohrwand zwischen zwei Ringen mit ausgewählten thermischen Eigenschaften macht die an sich vorteilhafte Schrumpftechnik auch für dieses Anwendungsgebiet zugänglich.

Im folgenden wird die Erfindung anhand der Zeichnung näher erläutert.

Es zeigen :

Figuren 1 und 2 je ein Ausführungsbeispiel einer erfindungsgemässen Verbindung im Schnitt,

Figuren 3-7 in schematischer Darstellung die einzelnen Phasen einer ersten Variante des erfindungsgemässen Verfahrens, und

Figuren 8-10 die Phasen einer zweiten Verfahrensvariante.

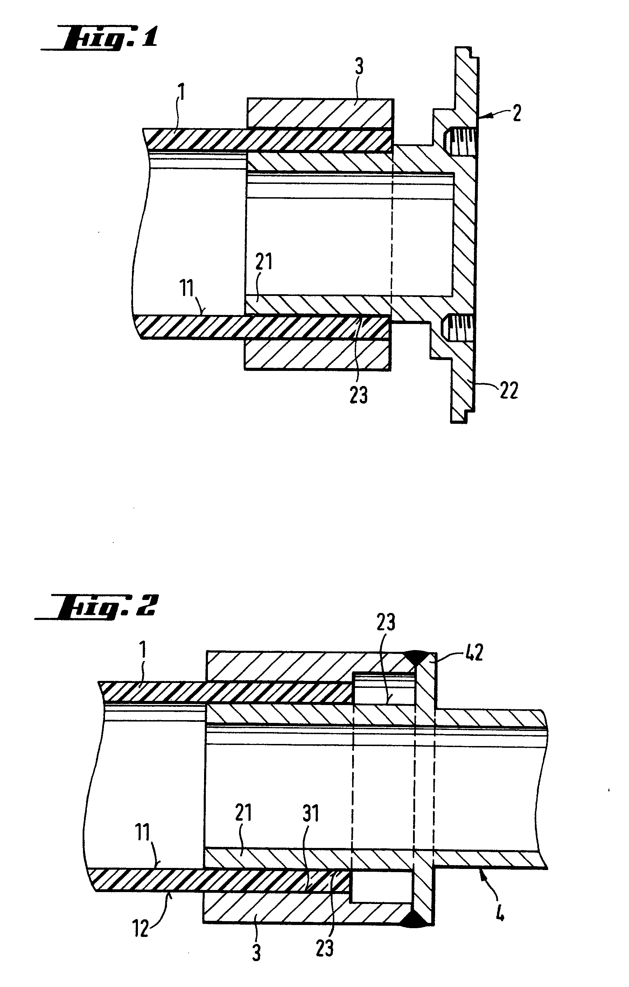

Die Fig. 1 zeigt die Verbindung einer faserverstärkten Kunststoff-Kraftübertragungswelle 1 mit einem Krafteinleitungsfitting 2 aus Metall. Das Ende der Welle 1 ist dabei zwischen einem inneren Ring 21, der zusammen mit einem Flansch 22 den Fitting 2 bildet, und einem äusseren Gegenring 3 in noch zu erläuternder Weise eingespannt. Die Kraftübertragung erfolgt im Reibschluss zwischen der Aussenfläche 23 des inneren Rings 21 und der Innenfläche 11 der Welle 1.

Bei der Variante nach Fig. 2 ist der Gegenring 3 etwas länger und mit einem radialen Flansch 42 des hier rohrförmigen Metallteils 4 verschweisst. Auf diese Weise wird auch die Reibschlussverbindung zwischen der Aussenfläche 12 der Welle und der Innenfläche 31 des Gegenrings 3 zur Kraftübertragung ausgenutzt, und es können daher wesentlich grössere Kräfte zwischen Welle 1 und Metallteil 4 übertragen werden. Statt durch Schweissung können Gegenring 3 und Metallteil 4 natürlich auch anders miteinander verbunden sein.

Die dargestellte Verbindung ist selbstverständlich nicht nur zur Uebertragung von Drehmomenten, sondern auch von Axialkräften geeignet. Der mit der Welle verbundene Metallteil kann beliebige Form besitzen, vorausgesetzt er weist eine Hülse bzw. Ring gemäss den Figuren auf.

Der Metallteil kann somit ein reiner Krafteinleitungsfitting wie auch selbst wieder eine Welle sein. Ferner versteht es sich, dass die beiden die Wellenwand zwischen sich einspannenden Ringe auch vertauscht sein könnten, d. h., dass der Ring des Metallteils ohne weiteres auch auf der Welle sitzen könnte.

Der Zusammenbau der einzelnen Teile der Verbindung sowie deren gegenseitige Verspannung erfolgt im Prinzip nach der im Metallbau bekannten Schrumpftechnik, welche sich die grundlegende Eigenschaft der meisten Konstruktionsmaterialien, sich bei Temperaturänderung auszudehnen bzw. zusammenzuziehen, zunutze macht.

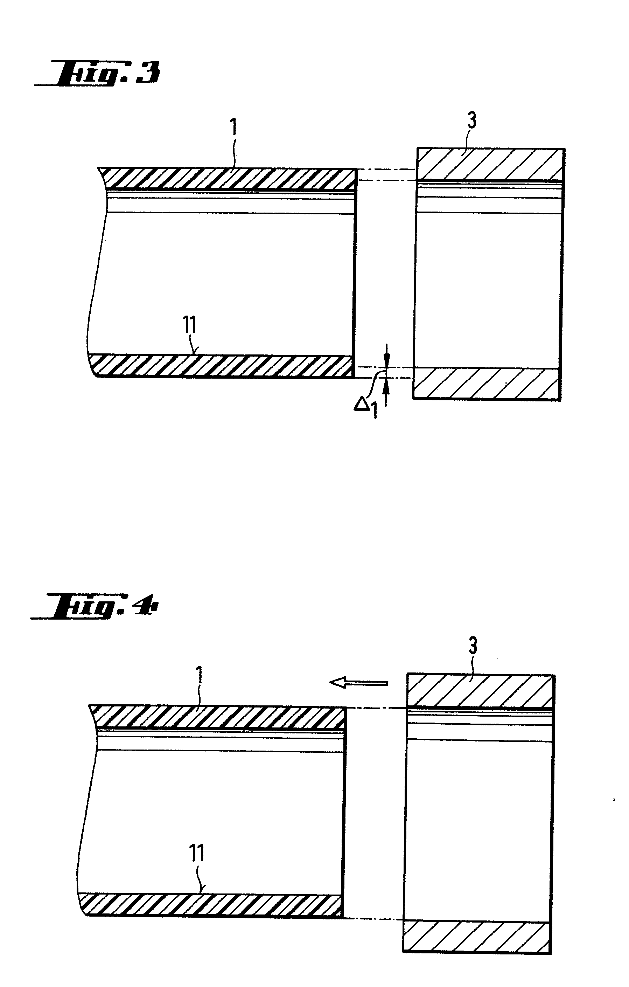

Die Fig. 3-7 illustrieren die einzelnen Phasen einer ersten Verfahrensvariante. Zunächst wird der Aussenring 3 so vorbereitet, dass sein Innendurchmesser (bei gleicher Temperatur) etwas kleiner ist als der Aussendurchmesser des einzuspannenden Wellenendes 1, dessen äussere Oberfläche auf genaue Toleranz gedreht ist. Das Uebermass (Differenz der Radien) ist in der Fig. 3 mit $\Delta_1$ bezeichnet.

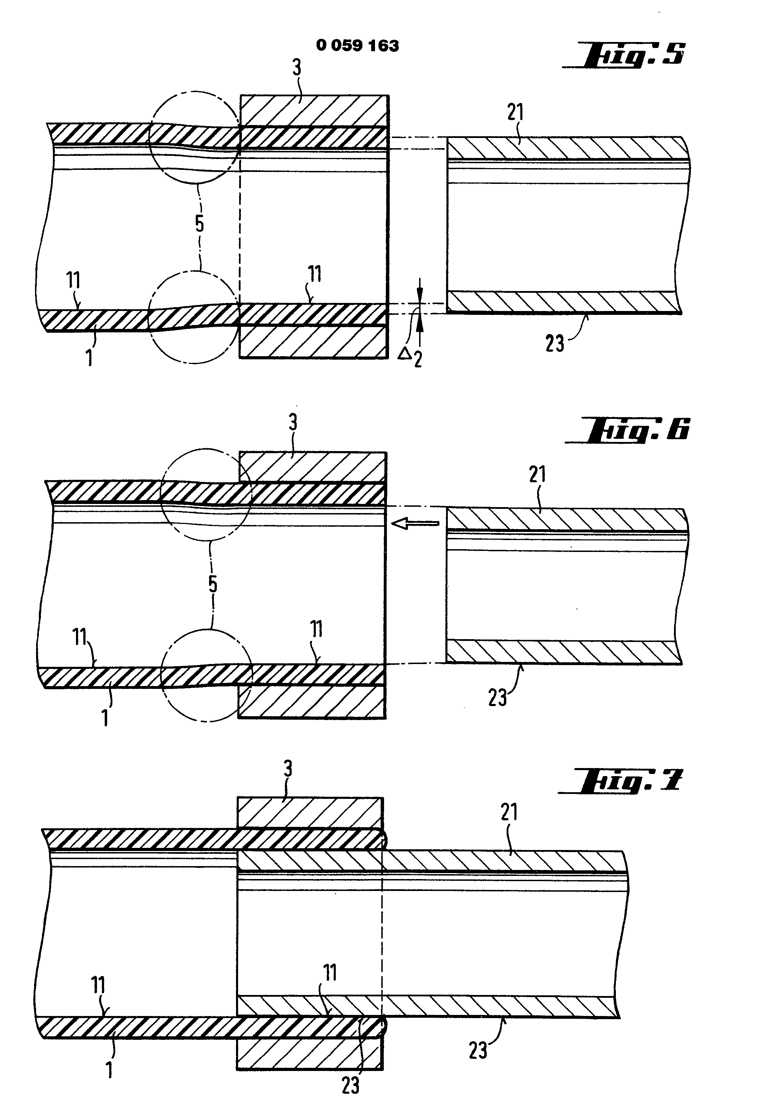

Nunmehr wird der Aussenring 3 soweit erwärmt oder gegebenenfalls auch die Welle 1 entsprechend gekühlt, bis der Ring weiter ist als die Welle und auf diese aufgeschoben werden kann (Fig. 4).

Beim darauf folgenden Temperaturausgleich zieht sich der Ring zusammen bzw. dehnt sich die Welle aus und die beiden Teile verspannen sich gegenseitig. Dabei kommt es zu einer leichten Verringering des mittleren Wellendurchmessers im eingespannten Bereich (Fig. 5).

Nunmehr wird der zum Metallteil gehörige innere Ring 21, dessen Aussendurchmesser bei Temperaturgleichheit etwas grösser ist als der Innendurchmesser der Welle (Uebermass $\Delta_2$), durch Kühlung und/oder Erwärmen der Welle mit dem aufgeschrumpften Ring 3 relativ zur Welle soweit verkleinert (Fig. 6), dass er in die Welle eingesetzt werden kann. Beim darauffolgenden Temperaturausgleich verspannen sich nun auch der innere Ring und die Welle, wobei, sofern die ursprünglichen Uebermasse $\Delta_1$ und $\Delta_2$ der beiden Ringe geeignet bemessen waren, die durch die Aufschrumpfung des Aussenrings bewirkte Durchmesserverringerung des eingespannten Wellenendes wieder aufgehoben wird (Fig. 7).

Für die Ermüdungsfestigkeit der Welle bzw. der Verbindung ist von besonderer Wichtigkeit, dass durch die von den Ringen 3 und 21 erzeugten Spannungen in der fertigen Verbindung keine bleibenden Deformationen der Welle erzeugt werden, welche zusätzliche innere Spannungen in der Welle und damit eine Schwächung der Belastbarkeit durch äussere Kräfte zur Folge hätten. Solche Deformationen, wie sie z. B. in den Fig. 5 und 6 an den mit 5 bezeichneten Uebergängen zwischen eingespanntem und nicht eingespanntem Wellenbereich vorhanden sind, lassen sich, wie schon vorstehend erwähnt, durch geeignete Bemessung der Uebermasse $\Delta_1$ und $\Delta_2$ der beiden Ringe und damit der von ihnen beim Temperaturausgleich erzeugten Spannungen erreichen. Optimal ist, wenn sich die vom äusseren und vom inneren Ring erzeugten Zusatzspannungen bzw. Kräfte in etwa aufheben, so dass also lediglich die Wand der Welle etwas gepresst wird, der mittlere Wellendurchmesser aber konstant bleibt. Die absolute Grösse der Vorspannungen der Ringe bzw. der dadurch bedingten Press- und Reibungskräfte zwischen Ringen und Welle hängt natürlich von den zwischen diesen beiden Teilen zu übertragenden Momenten und Kräften ab. Die Dimensionierung kann dabei analog zu den Metall-Metall-Reibschlussverbindungen erfolgen.

Wenn einer der beiden Ringe, zwischen denen die Welle eingespannt ist, im Verhältnis zum anderen sehr steif in Umfangsrichtung iat, beispielsweise mindestens etwa um den Faktor 5, so kann die gewünschte Klemmwirkung auch dadurch erzeugt werden, dass nur der jeweils andere, weniger steife Ringe auf die Welle auf- bzw. in die Welle eingeschrumpft wird. Die Gefahr der Verformung der Welle ist dann aufgrund der Steifigkeit des einen Rings bedeutend geringer. Diese Methode benötigt eine Schrumpfoperation weniger, erfordert aber steifere und damit notwendigerweise grössere bzw. stärkere und dementsprechend schwerere Ringe, was für viele Anwendungen unerwünscht ist.

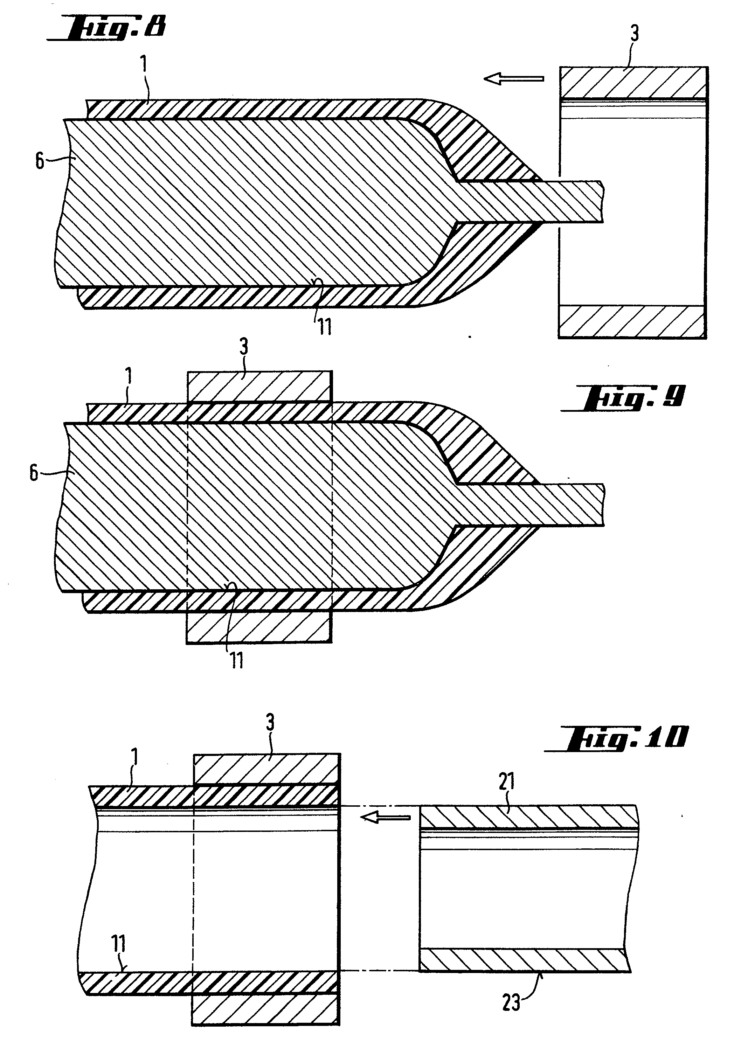

In den Fig. 8-10 ist eine weitere, besonders zweckmässige Methode zur Herstellung einer erfindungsgemässen Verbindung schematisch dargestellt. Hier wird der äussere Ring 3 bereits während des Fertigungsprozesses der Welle 1 auf diese aufgebracht. Die Welle befindet sich dabei noch auf dem Wickeldorn 6 und die Kunststoffmatrix ist noch nicht fertig ausgehärtet, sondern noch relativ weich und deformierbar.

Der Innendurchmesser des Rings 3 ist hier — bezogen auf gleiche Temperaturen — etwa gleich wie der Aussendurchmesser der Welle. Der Ring wird nur gerade soviel gegenüber der Welle überhitzt, dass er ohne nennenswerte Verdrängung der obersten Kunststoffschicht auf die Welle aufgeschoben werden kann (Fig. 8).

Anschliessend wird die Welle zusammen mit dem Aussenring fertig ausgehärtet (Fig. 9). Danach wird der Wickeldorn 6 entfernt und die Welle abgelängt. In die so vorbereitete, vom Aushärteprozess her noch warme Welle wird dann analog Fig. 6 der auf Raumtemperatur befindliche oder eventuell gekühlte innere Ring 21 in das Wellenende eingesetzt und dann das Ganze auf Raumtemperatur abkühlen gelassen.

Diese Methode hat den Vorteil, dass einerseits die Oberfläche der Welle im Einspannbereich nicht besonders vorbereitet werden muss und anderseits die für das Aushärten ohnehin nötige Wärmebehandlung der Welle gleich für das Schrumpfen ausgenutzt werden kann, wodurch sich dieses erheblich vereinfacht.

Wichtig für die Funktionsfähigkeit der erfindungsgemässen Verbindung bei Ermüdungsbeanspruchung ist, dass die miteinander verspannten Teile, also die beiden Ringe und die Welle, bei Temperaturänderungen im wesentlichen dasselbe Verhalten aufweisen. Insbesondere müssen die thermischen Ausdehnungskoeffizienten dieser Teile in Umfangsrichtung möglichst genau übereinstimmen, wobei der Uebereinstimmungsgrad umso grösser sein muss, je grösser der Temperaturbereich ist, in welchem die Verbindung voll funktionsfähig sein muss. Für die Praxis genügt es, wenn die Ausdehnungskoeffizienten um nicht mehr als etwa 20 % voneinander abweichen. Optimal ist natürlich vollständige Gleichheit.

Die erfindungsgemässe Verbindung ist besonders zur Befestigung des Krafteinleitungsfittings in Kunststoff-Kraftübertragungswellen geeignet. Für solche Wellen in Frage kommende aus Kohlfasern gewickelte Kunststoffrohre sind z. B. in der EP-A-9007 beschrieben. Ein Charakteristikum dieser Wellen ist eine Wickelstruktur, bei der alle Verstärkungsfasern in einem relativ schmalen Winkelbereich von 0° bis etwa ± 30° zur Wellenachse orientiert sind. Mit dieser Wickelstruktur ergeben sich unter Verwendung der üblichen Kunststoffe thermische Ausdehnungskoeffizienten in Umfangsrichtung von rund 20-25 · 10⁻⁶/K. Als Material für den Krafteinleitungsfitting kann in diesem Falle Aluminium verwendet werden, welches mit seinem Ausdehnungskoeffizienten von etwa 23 · 10⁻⁶/K dann bestens an die Welle angepasst ist.

## Ansprüche

1. Drehfeste Verbindung einer aus einem faserverstärkten Kunststoffrohr bestehenden Torsionswelle mit einem Metallelement, insbesondere einem Drehmomenteinleitungsfitting, wobei die Wand der Welle (1) im Endbereich zwischen einem inneren und einem äusseren Metallteil (3, 21) reibschlüssig eingespannt ist, dadurch gekennzeichnet, dass die beiden Metallteile als Ringe (3, 21) ausgebildet sind, von denen einer ein Teil des Metallelements (2) ist, dass die beiden Ringe (3, 21) aus einem Material bestehen, dessen thermischer Ausdehnungskoeffizient in Umfangsrichtung um nicht mehr als etwa 20 % von demjenigen der Welle abweicht, und dass die Ringe (3, 21) unter einer thermisch erzeugten Vorspannung stehen.

2. Verbindung nach Anspruch 1, dadurch gekennzeichnet, dass der thermische Ausdehnungskoeffizient des Ring-Materials im wesentlichen gleich gross ist wie derjenige der Welle (1).

3. Verbindung nach Anspruch 1 oder 2, dadurch gekennzeichnet, dass die Spannungen der beiden Ringe (3, 21) so aufeinander abgestimmt sind, dass der mittlere Durchmesser der Welle (1) im eingespannten Bereich im wesentlichen etwa gleich ist demjenigen im daran anschliessenden Bereich.

4. Verbindung nach Anspruch 1 oder 2, dadurch gekennzeichnet, dass einer der beiden Ringe (3, 21) in Umfangsrichtung eine wenigstens 5 mal höhere Steifigkeit besitzt als der andere Ring.

5. Verbindung nach einem der vorangehenden Ansprüche, dadurch gekennzeichnet, dass die beiden Ringe (3, 21) drehfest miteinander verbunden sind.

6. Verbindung nach einem der vorangehenden Ansprüche, dadurch gekennzeichnet, dass derjenige Ring (21), der Teil des Metallelements (2) ist, im Inneren der Welle angeordnet ist.

7. Verbindung nach einem der vorangehenden Ansprüche, dadurch gekennzeichnet, dass die Welle (1) mit Fasern hoher Steifigkeit, wie z. B. Kohlefasern, verstärkt ist, die in einem Winkelbereich von 0° bis ± 30° zur Wellenachse orientiert sind, so dass der thermische Ausdehnungskoeffizient der Welle in Umfangsrichtung etwa 20-25 · 10⁻⁶/K beträgt, und dass die beiden Ringe (3, 21) aus Aluminium bestehen.

8. Verfahren zur Herstellung einer Verbindung nach Anspruch 1, dadurch gekennzeichnet, dass zuerst der äussere (3) der beiden Ringe (3, 21) auf die Welle und dann diese zusammen mit dem äusseren Ring auf den inneren Ring (21) thermisch aufgeschrumpft werden.

9. Verfahren nach Anspruch 8, dadurch gekennzeichnet, dass der äussere Ring (3) bereits bei der Herstellung der Welle (1) in einem Zeitpunkt nach der Gelierung und vor der vollständigen Aushärtung der Kunststoffmatrix auf das Wellenende aufgebracht wird.

10. Verfahren nach Anspruch 9, dadurch gekennzeichnet, dass der innere Ring (21) unmittelbar im Anschluss an den Aushärtungsprozess in die von letzterem noch warme Welle eingesetzt wird.

## Claims

1. A non-rotatable connection between a quill shaft consisting of a fibre-reinforced plastics tube, and a metal element, in particular a power input fitting, the wall of the shat (1) being frictionally clamped in the end zone between an inner and an outer metal part (3, 21), characterised in that the two metal parts are shaped as rings (3, 21), one of which is part of the metal element (2), that the two rings (3, 21) consist of a material whose coefficient of thermal expansion circumferentially differs by not more than about 20 % from that of the shaft, and that the rings (3, 21) are under a thermaly produced prestressing.

2. A connection according to claim 1, characterised in that the thermal coefficient of the ring material is substantially equal to that of the shaft (1).

3. A connection according to claim 1 or 2, characterised in that the stresses in the two rings (3, 21) are so adapted to one another that the mean diameter of the shaft (1) in the clamped area is substantially equal to that in the adjacent area.

4. A connection according to claim 1 or 2, characterised in that one of the two rings (3, 21) circumferentially has a rigidity at least five times greater than the other ring.

5. A connection according to any one of the preceding claims, characterised in that the two rings (3, 21) are interconnected so that they cannot rotate relatively to one another.

6. A connection according to any one of the preceding claims, characterised in that the ring (21) which is part of the metal element (2) is disposed inside the shaft.

7. A connection according to any one of the preceding claims, characterised in that the shaft (1) is reinforced with high-rigidity fibres, e. g. carbon fibres, oriented in an angular range of from $0°$ to $\pm 30°$ to the shaft axis, so that the coefficient of thermal expansion of the shaft circumferentially is about $20\text{-}25 \cdot 10^{-6}/K$ and the two rings (3, 21) consist of aluminium.

8. A method of producing a connection according to claim 1, characterised in that first the outer one (3) of the two rings (3, 21) is shrunk thermally on to the shaft and then the latter together with the outer ring is shrunk thermally on to the inner ring (21).

9. A method according to claim 8, characterised in that the outer ring (3) is fitted to the shaft end during manufacture of the shaft (1) at a time after gelling and before complete curing of the plastics matrix.

10. A method according to claim 9, characterised in that the inner ring (21) is fitted into the shaft immediately after the curing process while the shaft is still warm from the latter process.

## Revendications

1. Liaison avec solidarisation en rotation d'un arbre de torsion consistant en un tube en matière plastique renforcée de fibres avec un élément en métal, raccord d'introduction de couples en particulier, où la paroi de l'arbre (1) est, dans la partie d'extrémité de l'arbre, encastrée par friction entre une pièce en métal intérieure et une pièce en métal extérieure (3, 21), caractérisée en ce que les deux pièces en métal sont réalisées sous la forme de bagues (3, 21), l'une de ces bagues constituant une partie de l'élément en métal (2), que les deux bagues (3, 21) sont fabriquées en un matériau dont le coefficient de dilatation thermique dans le sens circonférenciel ne diverge pas de plus d'environ 20 % de celui de l'arbre, et que les bagues (3, 21) se trouvent sous une prétension produite thermiquement.

2. Liaison selon la revendication 1, caractérisée en ce que le coefficient de dilatation thermique du matériau des bagues est quasiment identique à celui de l'arbre (1).

3. Liaison selon la revendication 1 ou 2, caractérisée en ce que les tensions des deux bagues (3, 21) sont adaptées l'une à l'autre de sorte telle que le diamètre moyen de l'arbre (1), dans la zone d'encastrement, est quasiment identique au diamètre de cet arbre dans la zone contiguë.

4. Liaison selon la revendication 1 ou 2, caractérisée en ce que l'une des deux bagues (3, 21) possède dans le sens circonférenciel une rigidité au moins 5 fois supérieure à celle de l'autre bague.

5. Liaison selon l'une quelconque des revendications précédentes, caractérisée en ce que les deux bagues (3, 21) sont accouplées entre elles en étant solidarisées en rotation.

6. Liaison selon l'une quelconque des revendications précédentes, caractérisée en ce que la bague (21) qui fait partie de l'élément en métal (2) est disposée à l'intérieur de l'arbre.

7. Liaison selon l'une quelconque des revendications précédentes, caractérisée en ce que l'arbre (1) est renforcé au moyen de fibres de solidité élevée, fibres de carbone par exemple, qui sont orientées à un angle de $0°$ à $\pm 30°$ par rapport à l'axe de l'arbre, de sorte que le coefficient de dilatation thermique de l'arbre dans le sens circonférenciel soit d'environ 20 à $25 \cdot 10^{-6}/K$, et que les deux bagues (3, 21) sont en aluminium.

8. Procédé pour la réalisation d'une liaison selon la revendication 1 caractérisé en ce qu'on réalise tout d'abord le frettage sous action thermique de la bague externe (3) sur l'arbre, puis celui de l'arbre pourvu de cette bague externe sur la bague interne (21).

9. Procédé selon la revendication 8, caractérisé en ce que la bague extérieure (3) est montée sur l'extrémité de l'arbre déjà au cours de la fabrication de l'arbre (1), à un moment postérieur à la gélification et antérieur au durcissement complet de la matrice de matière plastique.

10. Procédé selon la revendication 9, caractérisé en ce que la bague interne (21) est montée immédiatement à la suite du processus de durcissement dans l'arbre encore chaud.

Fig. 1

Fig. 2

0 059 163

1

_Fig. 3_

_Fig. 4_

0 059 163

**Fig. 5**

**Fig. 6**

**Fig. 7**

**Fig. 8**

**Fig. 9**

**Fig. 10**